# EUROPÄISCHE PATENTANMELDUNG

(11) **EP 1 096 741 A1**
(43) Veröffentlichungstag der Anmeldung: **02.05.2001**
(21) Anmeldenummer: 99120868.7
(22) Anmeldetag: 26.10.1999
(51) Int. Cl.: H04L 12/56, H04Q 11/04

(54) **Verfahren zur Sicherstellung der synchronen Verarbeitung in Zwei Signalverarbeitungseinrichtungen**

(71) Anmelder: SIEMENS AKTIENGESELLSCHAFT, 80333 München (DE)
(72) Erfinder: Vetter, Rainer, 81247 München (DE); Brazdrum Helmut,, D - 85622 FELDKIRCHEN (DE)

(57) **Zusammenfassung**

Zur Sicherstellung der synchronen Verarbeitung von Signaländerungen eines asynchron eintreffenden Eingangssignals in zwei synchron arbeitenden Signalverarbeitungseinrichtungen (UN0, UN1) gibt jede Signalverarbeitungseinrichtung (UN0, UN1) auf das Auftreten einer Signaländerung hin ein Synchronisier-Anforderungssignal an die jeweils andere Signalverarbeitungseinrichtung (UN1, UN0) ab, und in jeder Signalverarbeitungseinrichtung (UN0, UN1) werden die Abgabe eines solchen eigenen Synchronisier-Anforderungssignals und eines Synchronisier-Anforderungssignals von der jeweils anderen Signalverarbeitungseinrichtung (UN1, UN0) zur Ermittlung des Verarbeitungsstatus ausgewertet.

## Beschreibung

Die Erfindung bezieht sich auf ein Verfahren zur Sicherstellung der synchronen Verarbeitung von Signaländerungen eines asynchron eintreffenden Eingangssignals in zwei synchron arbeitenden Signalverarbeitungseinrichtungen, in denen die betreffenden Signaländerungen vor ihrer Weiterleitung innerhalb einer bestimmten, ein Zeitfenster festlegenden Zeitspanne zu übernehmen sind und von denen diese Übernahme gemeldet wird.

Es ist bereits eine Schaltungsanordnung mit im mikrosynchronen Parallellauf betriebenen Verarbeitungseinheiten zur Bearbeitung von ATM-Informationen bekannt (DE 195 35 800 A1), die ATM-seitig mit einem Koppelfeld und über eine Busschnittstelle mit einem zentralen Steuerwerk in Verbindung stehen. Dieses zentrale Steuerwerk dient u.a. der Auswertung von in den Verarbeitungseinheiten entstandenen Fehlerstatistiken und der Überwachung des Synchronbetriebs durch Vergleich der Verarbeitungsergebnisse. Die Fehlerstatistikdaten werden dabei in ATM-Sendezellen gepackt und über das Koppelfeld jeweils an beide Verarbeitungseinheiten zurückgeschleift und dann über die Busschnittstelle dem Steuerwerk zugeführt. Durch diese Maßnahmen ist ein Auslesen der Fehlerstatistikdaten ermöglicht, ohne dass dabei eine Ungleichheit und damit fälschlicherweise der Verlust der Mikrosynchronität der im mikrosynchronen Parallellauf betriebenen Verarbeitungseinheiten signalisiert wird. Eine mikrosynchrone Arbeitsweise zeichnet sich dabei dadurch aus, dass beide Verarbeitungseinrichtungen bzw. -einheiten zwar jeweils mit eigenem Taktsignal arbeiten, dass jedoch diese Taktsignale mit sehr engen Toleranzen mit einem externen Referenztaktsignal synchronisiert sind.

Es hat sich nun gezeigt, dass bei der bekannten Schaltungsanordnung beim Verlust der synchronen Arbeitsweise in einer der betreffenden Verarbeitungseinheiten keine unmittelbare Fehlerlokalisierung möglich ist. Eine solche Fehlerlokalisierung muß dann mittels Testroutinen ermittelt werden, die erforderlichenfalls in beiden Verarbeitungseinheiten nacheinander ablaufen, was relativ aufwendig ist.

Der Erfindung liegt daher die Aufgabe zugrunde, bei einem Verfahren der eingangs genannten Art sicherzustellen, dass in beiden Signalverarbeitungseinrichtungen stets gleiche Statusinformationen bezüglich der Verarbeitung von Signaländerungen vorhanden sind und dass darüber hinaus eine schnellstmögliche Fehlerlokalisierung bei Verlust der synchronen Verarbeitung von Signaländerungen eines Eingangssignals in den beiden Signalverarbeitungseinrichtungen ermöglicht wird.

Gelöst wird die vorstehend aufgezeigte Aufgabe bei einem Verfahren der eingangs genannten Art erfindungsgemäß dadurch, dass von jeder Signalverarbeitungseinrichtung auf das Auftreten einer Signaländerung des Eingangssignals hin ein Synchronisier-Anforderungssignal an die jeweils andere, als Partner-Signalverarbeitungseinrichtung wirkende Signalverarbeitungseinrichtung abgegeben wird und dass in jeder Signalverarbeitungseinrichtung bezüglich jeder Signaländerung des Eingangssignals die Abgabe eines Synchronisier-Anforderungssignals an die Partner-Signalverarbeitungseinrichtung und das Vorliegen eines Synchronisier-Anforderungssignals von der betreffenden Partner-Signalverarbeitungseinrichtung ausgewertet werden.

Durch diese Maßnahmen wird der Vorteil erreicht, dass auf relativ einfache Weise in beiden Signalverarbeitungseinrichtungen festgestellt werden kann, ob beide Signalverarbeitungseinrichtungen synchron arbeiten, und dass bei Auftreten eines Fehlers in dieser synchronen Arbeitsweise in beiden Verarbeitungseinrichtungen festgestellt werden kann, in welcher Signalverarbeitungseinrichtung ein Fehler aufgetreten ist.

Durch die Erfindung ist also auf relativ einfache Weise sichergestellt, dass in beiden Signalverarbeitungseinrichtungen stets gleiche Informationen bezüglich des jeweiligen Verarbeitungsstatus vorliegen, so dass im Falle des Verlustes der synchronen Arbeitsweise in den beiden Signalverarbeitungseinrichtungen schnellstmöglich eine Fehlerlokalisierung ermöglicht ist.

Die genannte Auswertung der Synchronisier-Anforderungssignale erfolgt dabei vorzugsweise derart, dass allein aus den genannten Synchronisier-Anforderungssignalen ein synchrones bzw. nicht-synchrones Arbeiten der beiden Signalverarbeitungseinrichtungen festgestellt wird. Dies bringt den Vorteil mit sich, dass ohne weiteren Aufwand der jeweilige Arbeitszustand der beiden Signalverarbeitungseinrichtungen allein aus den genannten Synchronisier-Anforderungssignalen bestimmt werden kann.

Zweckmäßigerweise erfolgt in der jeweiligen Signalverarbeitungseinrichtung die Übernahme und Bereitstellung des Synchronisier-Anforderungssignals zur Auswertung von der jeweiligen Partner-Signalverarbeitungseinrichtung mit einem in dieser Partner-Signalverarbeitungseinrichtung benutzten Taktsignal gesteuert, und in der jeweiligen Signalverarbeitungseinrichtung erfolgt die Abfrage des Vorliegens eines Synchronisier-Anforderungssignals von der zugehörigen Partner-Signalverarbeitungseinrichtung auf das Auftreten der jeweiligen Signaländerung des Eingangssignals hin mit einem in der betreffenden Signalverarbeitungseinrichtung benutzten Taktsignal gesteuert. Durch die Einbeziehung der erwähnten Taktsignale in die Verarbeitung der Synchronisier-Anforderungssignale ist somit in vorteilhafter Weise eine Kompensation der Laufzeiten zwischen den Signalverarbeitungseinrichtungen erreicht, womit eine Überwachung der beiden Signalverarbeitungseinrichtungen auf eine taktsynchrone Verarbeitung von Signaländerungen eines Eingangssignals ermöglicht ist, wie dies gerade bei mikrosynchron arbeitenden Verarbeitungseinrichtungen gefordert wird.

In vorteilhafter Weise wird in jeder Signalverarbeitungseinrichtung das Vorliegen eines Synchronisier-Anforderungssignals von der jeweiligen Partner-Signalverarbeitungseinrichtung zur Ermittlung eines entsprechenden Anforderungssignalzustands unter Abgabe eines zugehörigen Anforderungs-Zustandssignals ausgewertet, und bei Abgabe eines Synchronisier-Anforderungssignals von der betreffenden Signalverarbeitungseinrichtung wird das Vorliegen des genannten Anforderungs-Zustandssignals innerhalb des genannten Zeitfensters überprüft. Hierdurch wird in vorteilhafter Weise eine besonders einfache Überprüfung der synchronen Arbeitsweise beider Signalverarbeitungseinrichtungen ermöglicht.

Vorzugsweise werden bei in einer Mehrzahl von gleichzeitig vorliegenden Eingangssignalen die auftretenden Signaländerungen in der jeweiligen Signalverarbeitungseinrichtung parallel verarbeitet. Dies bringt den Vorteil einer schnellen Verarbeitung der betreffenden Signaländerungen mit sich.

Als Alternative ist es jedoch möglich, die in einer Mehrzahl von gleichzeitig vorliegenden Eingangssignalen die auftretenden Signaländerungen in der jeweiligen Signalverarbeitungseinrichtung im Multiplexbetrieb seriell zu verarbeiten. Dies bringt den Vorteil eines besonders geringen Verbindungs- und Verarbeitungsaufwands mit sich.

Vorzugsweise kann dabei jedoch auch so vorgegangen sein, dass die parallele Verarbeitung und die serielle Verarbeitung der Signaländerungen in der Weise kombiniert werden, dass bei in einer Mehrzahl von gleichzeitig vorhandenen Eingangssignalen jeweils eine Anzahl dieser Eingangssignale als Gruppe derart verarbeitet wird, dass die innerhalb der betreffenden Gruppe von Eingangssignalen auftretenden Signaländerungen in der jeweiligen Signalverarbeitungseinrichtung parallel verarbeitet werden und dass die einzelnen Gruppen von Eingangssignalen im Multiplexbetrieb seriell verarbeitet werden. Dadurch lassen sich die Vorteile der parallelen Signalverarbeitung und der seriellen Signalverarbeitung weitgehend miteinander vereinigen.

Anhand von Zeichnungen wird die Erfindung nachstehend beispielsweise näher erläutert.
- Fig. 1: zeigt in einem Blockdiagramm zwei Signalverarbeitungseinrichtungen, die nach dem Verfahren gemäß der Erfindung arbeiten.
- Fig. 2: veranschaulicht in einem Flußdiagramm den Ablauf eines Synchronisier-Eingangsprozesses bei dem Verfahren gemäß der Erfindung in den in Fig. 1 gezeigten Signalverarbeitungseinrichtungen.
- Fig. 3: veranschaulicht in einem Flußdiagramm den Ablauf eines Hauptprozesses bei dem Verfahren gemäß der Erfindung in den in Fig. 1 gezeigten Signalverarbeitungseinrichtungen.

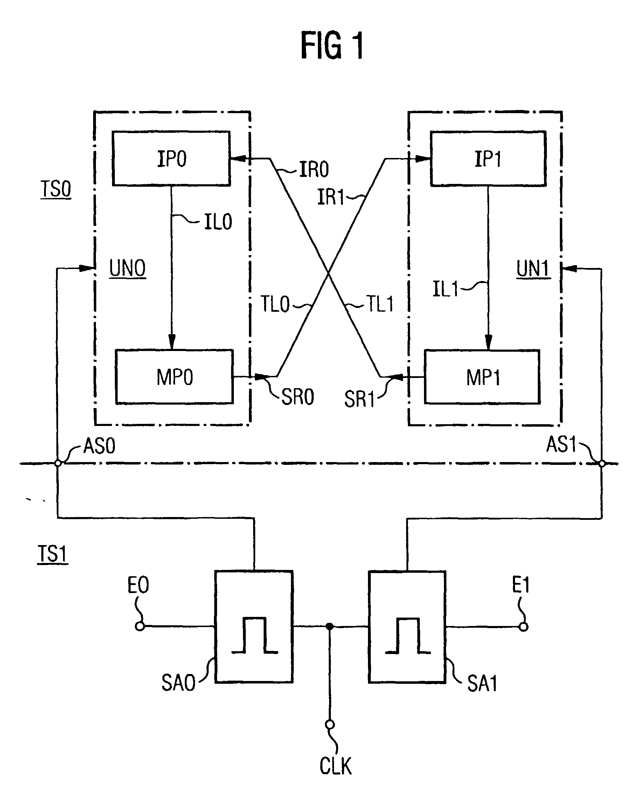

In dem Blockdiagramm gemäß Fig. 1 sind zwei Taktsysteme TSO und TS1 angedeutet, wie sie in mikrosynchron parallel betriebenen Verarbeitungseinheiten verwendet werden. Von dem Taktsystem TS1 sind hier lediglich zwei Signalabgabeeinrichtungen SA0 und SA1 angedeutet, denen an Eingängen E0 bzw. E1, welche praktisch miteinander verbunden sein können, weiterzuleitende Signale zugeführt werden und welche gemeinsam von einem Taktsignalanschluß CLK ein Taktsignal zugeführt erhalten. Die beiden Signalabgabeeinrichtungen SA0 und SA1 sind ausgangsseitig mit Eingangsanschlüssen AS0 und AS1 des Taktsystems TS0 verbunden. Bezüglich des Taktsystems TS0 sind hier Signalverarbeitungseinrichtungen UN0 und UN1 gezeigt, denen eingangsseitig von Eingangsanschlüssen AS0 bzw. AS1 her asynchron auftretende Signaländerungen eines Eingangssignals zugeführt werden, bei dem es sich beispielsweise um zwei in sich synchrone, aber zum Verarbeitungssystem asynchrone binäre Eingangssignale handeln kann.

In jeder der beiden Signalverarbeitungseinrichtungen UN0 und UN1 laufen bei der synchronen Verarbeitung von Signaländerungen der den Eingangsanschlüssen AS0 und AS1 zugeführten Eingangssignale im wesentlichen zwei Prozesse ab, nämlich zum einen ein Synchronisier-Eingangsprozeß und zum anderen ein Synchronisier-Hauptprozeß. Diese beiden Prozesse sind in Fig. 1 durch einzelne Blöcke in den Signalverarbeitungseinrichtungen UN0 und UN1 angegeben. Mit IP0 und IP1 ist dabei der Synchronisier-Eingangsprozeß in der jeweiligen Signalverarbeitungseinrichtung UN0 bzw. UN1 bezeichnet. Mit MP0 und MP1 ist der Synchronisier-Hauptprozeß in der jeweiligen Signalverarbeitungseinrichtung UN0 bzw. UN1 bezeichnet.

Die beiden Prozesse IP0 und MP0 bzw. IP1 und MP1 der jeweiligen Signalverarbeitungseinrichtung UN0 bzw. UN1 sind, wie in Fig. 1 angedeutet, über interne Anforderungsleitungen IL0 bzw. IL1 verbunden, über die der jeweilige Synchronisier-Eingangsprozeß IP0 bzw. IP1 auf das Auftreten einer Signalveränderung des Eingangssignals hin ein Synchronisier-Anforderungssignal an den zugehörigen Synchronisier-Hauptprozeß MP0 bzw. MP1 seiner Signalverarbeitungseinrichtung UN0 bzw. UN1 abgibt.

Die beiden Signalverarbeitungseinrichtungen UN0 und UN1 sind mit ihren jeweiligen beiden Prozessen IP0, MP0 bzw. IP1, MP1 noch über gesonderte Verbindungsleitungen mit der jeweils anderen, als Partner-Signalverarbeitungseinrichtung wirkenden Signalverarbeitungseinrichtung UN1 bzw. UN0 verbunden. Gemäß Fig. 1 ist dabei der Synchronisier-Hauptprozeß MP0 mit einem Synchronisier-Anforderungsausgang SR0 über eine Verbindungsleitung TL0 mit einem Synchronisier-Anforderungseingang IR1 des Synchronisier-Eingangsprozesses IP1 der Signalverarbeitungseinrichtung UN1 verbunden. In entsprechender Weise ist der Synchronisier-Hauptprozeß MP1 der Signalverarbeitungseinrichtung UN1 mit einem Synchronisier-Anforderungsausgang SR1 über eine Verbindungsleitung TL1 mit einem Synchronisier-Anforderungseingang IR0 des Synchronisier-Eingangsprozesses IP0 der Signalverarbeitungseinrichtung UN0 verbunden.

Durch diesen Aufbau der beiden synchron arbeitenden Signalverarbeitungseinrichtungen UN0 und UN1 wird die synchrone Verarbeitung von an den Eingangsanschlüssen AS0 und AS1 auftretenden Signaländerungen asynchron auftretender Eingangssignale sichergestellt. Dazu werden, wie weiter unten noch näher ersichtlich werden wird, die betreffenden Signaländerungen vor ihrer Weiterleitung innerhalb einer bestimmten, ein Zeitfenster festlegenden Zeitspanne übernommen, und diese Übernahme wird von beiden Signalverarbeitungseinrichtungen UN0 und UN1 zur Ermittlung ihres synchronen Arbeitens der jeweils anderen Partner-Signalverarbeitungseinrichtung UN1 bzw. UN0 über die erwähnten Verbindungsleitungen TL0 bzw. TL1 gemeldet. Dazu wird von der Signalverarbeitungseinrichtung UN0 an die als Partner-Signalverarbeitungseinrichtung wirkende Signalverarbeitungseinrichtung UN1 und auch von der Signalverarbeitungseinrichtung UN1 an die für diese als Partner-Signalverarbeitungseinrichtung wirkende Signalverarbeitungseinrichtung UN0 auf das Auftreten jeder Signaländerung des Eingangssignals hin ein Synchronisier-Anforderungssignal abgegeben, und zwar über den bzw. von dem in Fig. 1 dargestellten jeweiligen Synchronisier-Hauptprozeß MP0 bzw. MP1. In jeder der beiden Signalverarbeitungseinrichtungen UN0 und UN1 wird auf eine Signaländerung des Eingangssignals hin die Abgabe des vorstehend betrachteten Synchronisier-Anforderungssignals an die Partner-Signalverarbeitungseinrichtung UN1 bzw. UN0 und das Vorliegen eines Synchronisier-Anforderungssignals von der betreffenden Partner-Signalverarbeitungseinrichtung UN1 bzw. UN0 zur Ermittelung eines synchronen oder asynchronen Arbeitens der beiden Signalverarbeitungseinrichtungen UN0 und UN1 ausgewertet. In diese Auswertung sind dabei hier allein die erwähnten Synchronisier-Anforderungssignale einbezogen. Dieses Verfahren gestattet, den Arbeitsstatus beider Signalverarbeitungseinrichtungen schnell und eindeutig in jeder der beiden Signalverarbeitungseinrichtungen zu erkennen, wie dies weiter unten noch näher erläutert wird.

Um die in den beiden Signalverarbeitungseinrichtungen UN0 und UN1 jeweils benutzten eigenen Taktsignale, die normalerweise untereinander mikrosynchron sind, in die nach dem Verfahren gemäß der Erfindung erfolgende Verarbeitung und Auswertung der Synchronisier-Anforderungssignale mit zu berücksichtigen, erfolgt in der jeweiligen Signalverarbeitungseinrichtung UN0 bzw. UN1 vorzugsweise die Übernahme und die Bereitstellung des Synchronisier-Anforderungssignals zur Auswertung von der jeweiligen Partner-Signalverarbeitungseinrichtung UN1 bzw. UN0 mit einem in dieser Partner-Signalverarbeitungseinrichtung benutzten Taktsignal gesteuert, und in der jeweiligen Signalverarbeitungseinrichtung erfolgt die Abfrage des Vorliegens eines Synchronisier-Anforderungssignals von der zugehörigen Partner-Signalverarbeitungseinrichtung auf das Auftreten der jeweiligen Signaländerung des eigenen Eingangssignals hin mit einem in der betreffenden Signalverarbeitungseinrichtung benutzten Taktsignal gesteuert.

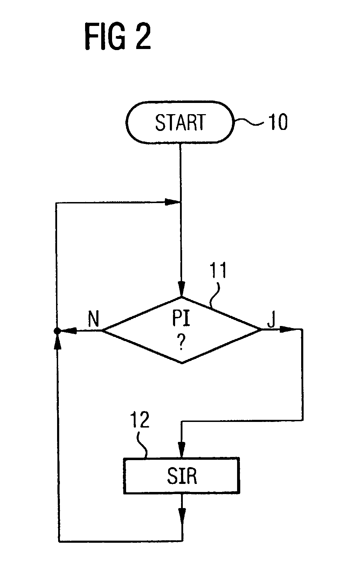

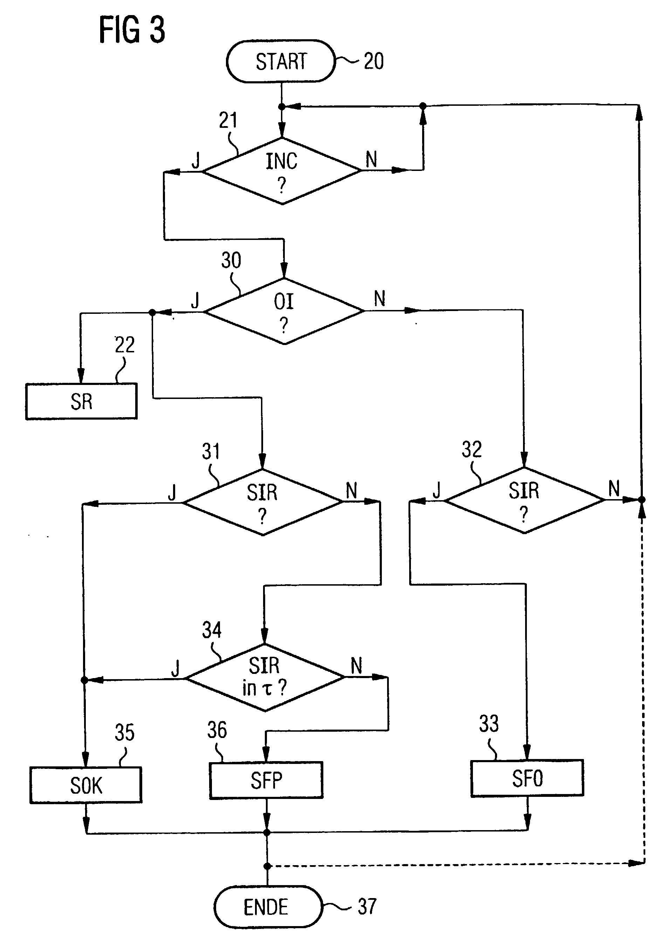

Im vorstehenden ist das Verfahren gemäß der Erfindung anhand des in Fig. 1 dargestellten Blockdiagramms generell erläutert worden. Nunmehr sei unter Bezugnahme auf die in Fig. 2 und Fig. 3 dargestellten Flußdiagramme das Verfahren gemäß der Erfindung noch weiter ins einzelne gehend betrachtet.

Die Fig. 2 und Fig. 3 zeigen in Ablaufdiagrammen das in einem der beiden Signalverarbeitungseinrichtungen UN0, UN1 durch dessen beide Prozesse IP0 und MP0 bzw. IP1 und MP1 ablaufende Verfahren. Das Verfahren beginnt gemäß Fig. 2 mit dem START-Block 10, der die Überprüfung von Signalen am Synchronisier-Anforderungseingang IR0 bzw. IR1 betrifft. Zu diesem Zweck muß eine entsprechende Angabe bzw. ein Statussignal SR gesetzt sein, auf das im Zusammenhang mit Fig. 3 noch eingegangen wird. Sodann gelangt das betreffende Verfahren zum Entscheidungsblock 11. Im Entscheidungsblock 11 wird überprüft, ob ein Synchronisier-Anforderungssignal (PI ?) von der Partner-Verarbeitungseinrichtung vorliegt oder nicht. Liegt ein derartiges Synchronisier-Anforderungssignal nicht vor, so wird die betreffende Frage mit NEIN (N) beantwortet, und das Verfahren kehrt zum Eingang des Entscheidungsblocks 11 zurück. Wenn die betreffende Frage indessen mit JA (J) beantwortet wird, so gelangt das Verfahren zu einem Statusblock 12 hin, der daraufhin aktiviert wird; in diesem Statusblock 12 ist als Angabe SIR hinterlegt bzw. abgespeichert, was angibt, dass von der Partner-Verarbeitungseinrichtung ein Synchronisier-Anforderungssignal vorliegt. Anschließend gelangt das Verfahren zum Eingang des Entscheidungsblocks 11 zurück.

Parallel zu dem an Hand von Fig. 2 erläuterten Verfahren läuft das in Fig. 3 veranschaulichte Verfahren ab, und zwar auf das Auftreten einer Signaländerung am Eingangsanschluß AS0 bzw. AS1. Gemäß Fig. 3 beginnt das Verfahren daraufhin beim START-Block 20 und gelangt dann zu dem Entscheidungsblock 21, in welchem durch die Frage INC ? überprüft wird, ob eine Signaländerung des Eingangssignals aufgetreten ist oder nicht. Wird die Frage mit NEIN (N) beantwortet, so gelangt das Verfahren zum Ausgangspunkt des Entscheidungsblocks 11 zurück. Wird die Frage indessen mit JA (J) beantwortet, so geht das Verfahren weiter zum Entscheidungsblock 30.

Im Entscheidungsblock 30 wird überprüft, ob von der eigenen Verarbeitungseinrichtung her ein Synchronisier-Anforderungssignal (OI ?) vorliegt oder nicht. Liegt ein derartiges Synchronisier-Anforderungssignal vor, so lautet die Antwort JA (J), und das Verfahren geht weiter zum Entscheidungsblock 31. Im Entscheidungsblock 31 wird überprüft, ob ein Synchronisier-Anforderungssignal (SIR ?) von der Partner-Signalverarbeitungseinrichtung her vorliegt. Außerdem wird ein Statusblock 22 aktiviert, in welchem eine Angabe SR hinterlegt bzw. abgespeichert ist, die angibt, dass an die Partner-Verarbeitungseinrichtung ein Synchronisier-Anforderungssignal abgegeben wird bzw. worden ist.

Im vorliegenden Fall liegt ein derartiges Synchronisier-Anforderungssignal SIR vor; es ist in dem Statusblock 12 gemäß Fig. 2 hinterlegt. Damit wird die im Entscheidungsblock 34 gestellte Frage mit JA (J) beantwortet, und das Verfahren gelangt zu einem Statusblock 35, der nunmehr aktiviert wird und in welchem im vorliegenden Fall eine Angabe SOK über eine einwandfreie Synchronisierung in beiden Verarbeitungseinrichtungen hinterlegt ist. Von dem Statusblock 35 gelangt das Verfahren dann zu dem ENDE-Block 37 hin, mit dem das beschriebene Verfahren beendet wird.

Wenn indessen die im Entscheidungsblock 31 erfolgende Abfrage nach Vorliegen eines Synchronisier-Anforderungssignals von der Partner-Signalverarbeitungseinrichtung mit NEIN (N) beantwortet wird, dann verzweigt das Verfahren vom Entscheidungsblock 31 zum Entscheidungsblock 34, in welchem innerhalb einer ein Zeitfenster darstellenden Zeitspanne τ erneut überprüft wird, ob ein Synchronisier-Anforderungssignal (SIR ?) von der Partner-Signalverarbeitungseinrichtung vorliegt oder nicht. Dieses Zeitfenster legt dabei diejenige Zeitspanne fest, innerhalb der in der jeweiligen Signalverarbeitungseinrichtung bei von dieser abgegebenem Synchronisier-Anforderungssignal ein entsprechendes Synchronisier-Anforderungssignal von der Partner-Signalverarbeitungseinrichtung eingetroffen sein muß, damit eine synchrone Verarbeitung von Signaländerungen des Eingangssignals in beiden Signalverarbeitungseinrichtungen noch als gewährleistet betrachtet werden kann.

Wird die mit dem Entscheidungsblock 34 verbundene Frage mit JA (J) beantwortet, so gelangt das Verfahren wieder zu dem Statusblock 35 hin, der dadurch aktiviert wird und durch den angegeben wird, dass in beiden Signalverarbeitungseinrichtungen die Synchronisierung einwandfrei ist.

Wann indessen die mit dem Entscheidungsblock 34 verbunden Frage mit NEIN (N) beantwortet wird, gelangt das Verfahren zu einem Statusblock 36, der daraufhin aktiviert wird und in welchem eine Angabe SFP darüber hinterlegt ist, dass die Synchronisierung von der Partner-Signalverarbeitungseinrichtung her fehlerhaft ist. Damit ist in dem gerade betrachteten Fall die Partner-Signalverarbeitungseinrichtung als die für die Synchronisierung fehlerhafte Signalverarbeitungseinrichtung ermittelt. Vom Statusblock 36 gelangt das Verfahren wieder zum ENDE-Block 37 hin, womit das Verfahren bezüglich der verarbeiteten Signaländerung des Eingangssignals abgeschlossen wird.

Im Zusammenhang mit dem Entscheidungsblock 30 ist oben der Fall betrachtet worden, dass ein Synchronisier-Anforderungssignal OI von der eigenen Signalverarbeitungseinrichtung her vorliegt. Nunmehr sei jedoch der Fall betrachtet, dass ein derartiges Synchronisier-Anforderungssignal OI nicht vorliegt, womit die mit dem Entscheidungsblock 30 verbundene Frage mit NEIN (N) beantwortet wird. Damit gelangt das Verfahren dann zum Entscheidungsblock 32 hin. In diesem Entscheidungsblock 32 wird wie im Entscheidungsblock 31 überprüft, ob ein Synchronisier-Anforderungssignal (SIR ?) von der Partner-Signalverarbeitungseinrichtung her vorliegt oder nicht. Wird die mit dem Entscheidungsblock 32 verknüpfte Frage mit NEIN (N) beantwortet, so gelangt das Verfahren wieder zum Eingang des Entscheidungsblocks 11 zurück. Wird indessen die betreffende Frage im Entscheidungsblock 32 mit JA (J) beantwortet, so gelangt das Verfahren zu einem Statusblock 33 hin und aktiviert diesen; in dem Statusblock 33 ist eine Angabe SFO über ein fehlerhaftes Arbeiten der eigenen Signalverarbeitungseinrichtung hinsichtlich der Abgabe eines Synchronisier-Anforderungssignals hinterlegt. Diese Angabe identifiziert somit von den beiden betrachteten Signalverarbeitungseinrichtungen die eigene Signalverarbeitungseinrichtung als die fehlerhafte Einrichtung bei der synchronen Verarbeitung der Signaländerung des Eingangssignals.

Vom Statusblock 33 gelangt das Verfahren wieder zu dem ENDE-Block 37 hin, mit dem das Verfahren bezüglich der betrachteten Verarbeitung einer Signaländerung des Eingangssignals abgeschlossen wird.

Den vorstehend anhand der Fig. 2 erläuterten Verfahrensschritten völlig entsprechende, jedoch spiegelbildlich zu sehende Verfahrensschritte laufen in der Partner-Signalverarbeitungseinrichtung ab, womit sichergestellt ist, dass beide Signalverarbeitungseinrichtungen über die gleiche Statusinformation bezüglich der Verarbeitung von Signaländerungen des Eingangssignals verfügen. In jeder der beiden Signalverarbeitungseinrichtungen liegt bei einwandfreier Synchronisierung beider Signalverarbeitungseinrichtungen die gleiche Angabe SOK über eine einwandfreie Synchronisierung vor. Im Falle einer nicht-synchronen Verarbeitung einer Signaländerung des Eingangssignals durch die beiden Signalverarbeitungseinrichtungen liegt in beiden Signalverarbeitungseinrichtungen eine Angabe darüber vor, welche Signalverarbeitungseinrichtungen für diese fehlerhafte Arbeitsweise verantwortlich ist.

Ergänzend zu den vorstehend unter Bezugnahme auf Fig. 2 beschriebenen Verfahrensschritten sei noch angemerkt, dass das Verfahren von den Statusblöcken 35, 36 und 33 gegebenenfalls auch zusätzlich (über die in Fig. 2 eingetragene gestrichelte Linie) zum Eingang des Entscheidungsblocks 12 zurückführen kann, um das Verfahren kontinuierlich ablaufen zu lassen.

Im übrigen sei noch angemerkt, dass mit dem vorstehend erläuterten Verfahren auch aufeinanderfolgend auftretende Signaländerungen eines Eingangssignals durch die beiden betrachteten Signalverarbeitungseinrichtungen synchron weiterverarbeitet werden können. Sind Signaländerungen einer Mehrzahl von gleichzeitig auftretenden Eingangssignalen zu verarbeiten, so kann dies durch das Verfahren gemäß der Erfindung in entsprechender Weise erfolgen, und zwar entweder dadurch, dass eine entsprechende Parallelverarbeitung der zu der betreffenden Mehrzahl von Eingangssignalen gehörenden Signaländerungen in entsprechender Weise wie oben erläutert erfolgt oder dass die Signaländerungen der in einer Mehrzahl vorliegenden Eingangssignale seriell im Multiplexverfahren verarbeitet werden. Es ist aber auch möglich, eine Mischform dieser beiden Verarbeitungsweisen vorzunehmen, indem jeweils zu einer Gruppe von Eingangssignalen gehörende Signaländerungen parallel verarbeitet werden und die einzelnen Gruppen von Eingangssignalen seriell nacheinander verarbeitet werden.

## Patentansprüche

1. Verfahren zur Sicherstellung der synchronen Verarbeitung von Signaländerungen eines asynchron eintreffenden Eingangssignals in zwei synchron arbeitenden Signalverarbeitungseinrichtungen, in denen die betreffenden Signaländerungen vor ihrer Weiterleitung innerhalb einer bestimmten, ein Zeitfenster festlegenden Zeitspanne zu übernehmen sind und von denen diese Übernahme gemeldet wird,
**dadurch gekennzeichnet**, dass von jeder Signalverarbeitungseinrichtung (UN0, UN1) auf das Auftreten einer Signaländerung des Eingangssignals hin ein Synchronisier-Anforderungssignal (an SR0, SR1) an die jeweils andere, als Partner-Signalverarbeitungseinrichtung (UN1, UN0) wirkende Signalverarbeitungseinrichtung abgegeben wird und dass in jeder Signalverarbeitungseinrichtung (UN0, UN1) bezüglich jeder Signaländerung des Eingangssignals die Abgabe eines Synchronisier-Anforderungssignals an die Partner-Signalverarbeitungseinrichtung (UN1, UN0) und das Vorliegen eines Synchronisier-Anforderungssignals von der betreffenden Partner-Signalverarbeitungseinrichtung (UN1, UN0) ausgewertet werden.

2. Verfahren nach Anspruch 1, **dadurch gekennzeichnet**, dass die genannte Auswertung der Synchronisier-Anforderungssignale (SR0, SR1) derart erfolgt, dass allein aus den genannten Synchronisier-Anforderungssignalen (an SR0, SR1) ein synchrones bzw. nicht-synchrones Arbeiten der beiden Signalverarbeitungseinrichtungen (UN0, UN1) festgestellt wird.

3. Verfahren nach Anspruch 1 oder 2, **dadurch gekennzeichnet**, dass in der jeweiligen Signalverarbeitungseinrichtung (UN0, UN1) die Aufnahme und Bereitstellung des Synchronisier-Anforderungssignals (von SR1, SR0) von der jeweiligen Partner-Signalverarbeitungseinrichtung (UN1, UN0) zwecks Auswertung mit einem in dieser Partner-Signalverarbeitungseinrichtung (UN1) benutzten Taktsignal gesteuert erfolgt
und dass in der jeweiligen Signalverarbeitungseinrichtung (UN0, UN1) die Abfrage des Vorliegens eines Synchronisier-Anforderungssignals von der zugehörigen Partner-Signalverarbeitungseinrichtung (UN1, UN0) auf das Auftreten der jeweiligen Signaländerung des Eingangssignals hin mit einem in der betreffenden Signalverarbeitungseinrichtung (UN0, UN1) benutzten Taktsignal gesteuert erfolgt.

4. Verfahren nach einem der Ansprüche 1 bis 3, **dadurch gekennzeichnet**, dass in jeder Signalverarbeitungseinrichtung (UN0, UN1) das Vorliegen eines Synchronisier-Anforderungssignals (von SR1, SR0) von der jeweiligen Partner-Signalverarbeitungseinrichtung (UN1, UN0) zur Ermittlung eines entsprechenden Anforderungssignalzustands unter Abgabe eines zugehörigen Anforderungs-Zustandssignals ausgewertet wird
und dass bei Abgabe eines Synchronisier-Anforderungssignals (von SR0, SR1) von der betreffenden Signalverarbeitungseinrichtung (UN0, UN1) das Vorliegen des genannten Anforderungs-Zustandssignals innerhalb des genannten Zeitfensters (τ) überprüft wird.

5. Verfahren nach einem der Ansprüche 1 bis 4, **dadurch gekennzeichnet**, dass bei einer Mehrzahl von gleichzeitig vorliegenden Eingangssignalen die in diesen auftretenden Signaländerungen in der jeweiligen Signalverarbeitungseinrichtung (UN0, UN1) parallel verarbeitet werden.

6. Verfahren nach einem der Ansprüche 1 bis 4, **dadurch gekennzeichnet**, dass bei in einer Mehrzahl von gleichzeitig vorhandenen Eingangssignalen die in diesen auftretenden Signaländerungen in der jeweiligen Signalverarbeitungseinrichtung (UN0, UN1) im Multiplexbetrieb seriell verarbeitet werden.

7. Verfahren nach Anspruch 5 oder 6, **dadurch gekennzeichnet**, dass bei einer Mehrzahl von gleichzeitig vorhandenen Eingangssignalen jeweils eine Anzahl dieser Eingangssignale als Gruppe derart verarbeitet wird, dass die innerhalb der betreffenden Gruppe von Eingangssignalen auftretenden Signaländerungen in der jeweiligen Signalverarbeitungseinrichtung (UN0, UN1) parallel verarbeitet werden und dass die einzelnen Gruppen von Eingangssignalen im Multiplexbetrieb seriell verarbeitet werden.
